# EUROPÄISCHE PATENTSCHRIFT

(11) **EP 3 300 975 B1**
(45) Veröffentlichungstag und Bekanntmachung des Hinweises auf die Patenterteilung: **28.11.2018**
(21) Anmeldenummer: 17020445.7
(22) Anmeldetag: 27.09.2017
(51) Int. Cl.: B60T 10/02, F16D 57/04

(54) **BREMSVORRICHTUNG FÜR EIN SCHWERLAST-FAHRZEUG, SCHWERLAST-FAHRZEUG UND VERFAHREN ZUR ERHÖHUNG DER BREMSLEISTUNG EINES SCHWERLAST-FAHRZEUGS**
BRAKING DEVICE FOR A HEAVY DUTY VEHICLE, HEAVY DUTY VEHICLE AND METHOD FOR INCREASING THE BRAKING POWER OF A HEAVY DUTY VEHICLE
DISPOSITIF DE FREINAGE POUR UN VÉHICULE DESTINÉ AU TRANSPORT DE CHARGES LOURDES, VÉHICULE DESTINÉ AU TRANSPORT DE CHARGES LOURDES ET PROCÉDÉ D'AUGMENTATION DE LA PUISSANCE DE FREINAGE D'UN VÉHICULE DESTINÉ AU TRANSPORT DE CHARGES LOURDES

(30) Priorität: 28.09.2016 DE 102016011630; 28.09.2016 DE 202016005921 U
(43) Veröffentlichungstag der Anmeldung: 04.04.2018
(73) Patentinhaber: Scheuerle Fahrzeugfabrik GmbH, 74629 Pfedelbach (DE)
(72) Erfinder: Kohlrautz, Ulf, 74629 Pfedelbach (DE)
(74) Vertreter: Leitner, Waldemar

(56) Entgegenhaltungen:
- WO-A1-2015/185215
- DE-A1- 3 936 735
- US-A- 5 848 664

## Beschreibung

Die Erfindung betrifft eine Bremsvorrichtung für ein Schwerlast-Fahrzeug, insbesondere ein selbstangetriebenes Schwerlast-Fahrzeug, welches ein Fahrgestell mit einer Anzahl von Radanordnungen mit Radmotoren besitzt, welchen ein von einer Antriebsvorrichtung bereitgestelltes Druckmedium über Druckleitungen mindestens eines Druckmittelkreislaufs zugeführt ist, wobei dieses Druckmedium nach dem Durchströmen des oder der Radmotoren über weitere Druckleitungen zu der Antriebsvorrichtung zurückgeführt ist, ein diese Bremsvorrichtung verwendendes Schwerlast-Fahrzeug sowie ein Verfahren zur Erhöhung der Bremsleistung eines Schwerlast-Fahrzeugs.

Derartige Fahrzeuge sind bekannt und werden im Schwerlast-Bereich zum Transport von schweren und/oder sperrigen Lasten eingesetzt. Insbesondere werden hierzu selbstangetriebene Fahrzeuge verwendet, die eine Antriebsvorrichtung aufweisen oder mit einer Antriebsvorrichtung gekoppelt sind, welche die zum Antrieb der Radanordnungen benötigte Antriebsenergie erzeugt.
Eine derartige Antriebsvorrichtung ist aus der DE 10 2010 023 307 A1 der Anmelderin bekannt. In dieser Druckschrift ist eine Antriebsvorrichtung für ein selbstangetriebenes Schwerlast-Fahrzeug beschrieben, welche ein Antriebsaggregat mit einem Verbrennungsmotor aufweist, der eine Pumpenanordnung zur Erzeugung eines hydraulischen Drucks antreibt. Über eine oder mehrere Druckleitungen wird das vom Antriebsaggregat druckbeaufschlagte Druckmedium zu dem Schwerlast-Fahrzeug geleitet und treibt dort hydraulische Radmotoren der Radanordnungen des Schwerlast-Fahrzeugs an. Derartige selbstfahrende, hydraulisch angetriebene Schwerlast-Fahrzeuge wurden bis jetzt überwiegend in räumlich begrenzten Bereichen, wie z. B. in Fabrikgeländen, in Werften, in Häfen, um nur einige Beispiele zu nennen, eingesetzt, um schwere Lasten über relativ kurze Strecken ohne größere Steigungen zu transportieren.
Derartige selbstangetriebene Schwerlast-Fahrzeuge werden aber in zunehmendem Maße auch zum Transport schwerer Lasten über längere Strecken eingesetzt, welche steilere Abschnitte aufweisen, so dass die bekannten Schwerlast-Fahrzeuge in der Regel zuerst eine Steigung zu überwinden und bei einer daran anschließenden Bergabfahrt hinreichend gebremst werden müssen. Das Überwinden einer Steigung lässt sich einfach bewerkstelligen, indem mehrere derartige Antriebsvorrichtungen gekoppelt werden, so dass in der Regel bei Bergauffahrten der bekannten Schwerlast-Fahrzeuge eine hinreichend große Motorisierung gegeben ist.

Probleme bereitet aber die Bergabfahrt: Bei dieser muss das Schwerlast-Fahrzeug gebremst werden. Aus Gründen des Treibstoffverbrauchs und des Umweltschutzes werden heutzutage aber als Antriebsaggregate der Antriebsvorrichtungen oft relativ kleinvolumige Dieselmotoren eingesetzt, welche im Verhältnis zu ihrer Antriebsleistung nur eine geringe Bremsleistung besitzen. Dies hat zur Folge, dass bei der Bergabfahrt diese dieselhydraulischen Antriebe das bekannte Schwerlast-Fahrzeug nicht mehr angemessen verlangsamen können. Die Benutzung der Betriebsbremse des Schwerlast-Fahrzeugs ist über eine längere Bergabstrecke nicht möglich, da ansonsten die Betriebsbremse heiß laufen und anschließend ausfallen würde.

Des weiteren ist es bei Nutzfahrzeugen und Reisebussen bekannt, im mechanischen Antriebsstrang einen Retarder einzusetzen, um die Bremsleistung derartiger Fahrzeuge zu erhöhen. Hierzu wird der Retarder dem Schalt- oder Automatikgetriebe des Nutzfahrzeugs nachfolgend angeordnet und ein Eingang des Retarders ist mit einem Ausgang dieses Getriebes mechanisch verbunden. An einem Ausgang des Retarders setzt eine Antriebswelle des Nutzfahrzeugs an, welche mit dessen Hinterachse mechanisch verbunden ist. Eine derartige Konstruktion besitzt nicht nur den Nachteil, dass sie relativ voluminös baut und der Retarder zwingend im mechanischen Antriebsstrang zwischen dem das Nutzfahrzeug antreibenden Motor und der angetriebenen Achse angeordnet sein muß. Diese Vorgehensweise besitzt auch den Nachteil, dass sie bei Schwerlast-Fahrzeugen, die eine Vielzahl von angetriebenen Achsen aufweist, nicht oder nur mit einem großen technischen Aufwand realisierbar ist.

Aus der DE 10 2009 039 829 A1 ist ein hydrostatisches Antriebssystem für eine mobile Arbeitsmaschine, insbesondere ein Flurförderfahrzeug, bekannt, welches einen hydrostatischen Fahrantrieb und eine Arbeitshydraulik aufweist. Zur Versorgung der Arbeitshydraulik ist eine Axialkolbenpumpe vorgesehen, die im Bremsbetrieb des Fahrantriebs als Retarderpumpe eingesetzt ist und somit als Belastungseinheit verwendet wird, die ein zusätzliches Stützmoment zum Verzögern der Arbeitsmaschine erzeugt und somit einer übermäßigen Erhöhung der Drehzahl eines das Antriebssystem antreibenden Verbrennungsmotors, welche die Axialkolbenpumpe der Arbeitshydraulik und eine Pumpe des Fahrantriebs antreibt, entgegenwirkt. Die im Bremsbetrieb als Retarderpumpe wirkende Axialpumpe wird also hier vom Verbrennungsmotor des Fahrzeugs angetrieben. Sie ist also wiederum im mechanischen Antriebsstrang angeordnet.
Die DE 39 36 735 A1 zeigt einen Bremsleistungswandler zum Einbau in selbstfahrende oder gezogene Straßenfahrzeuge in Form einer von mechanischer Reibung unabhängigen, vom Schub des Fahrzeugs betätigten Langzeitbremse, die Öl als Arbeitsflüssigkeit sowie eine Öl-Kühleinrichtung aufweist. Diese Öl-Kühleinrichtung kühlt eine als Wärmeträger dienende Hydraulikflüssigkeit, vorzugsweise mit Hilfe der Umgebungsluft. Dabei ist vorgesehen, dass während des normalen, ungebremsten Fahrlaufs kein Ölstrom fließt und kein Kolbendruck entsteht, so dass praktisch keine Flußleistung auftritt. Es ist eine Hochdruck-Kolbenpumpe vorgesehen, die in einem geschlossenen Öl-Kreislauf angeordnet ist, in dem sie im Bremsbetrieb einen Ölstrom auf Hochdruck zu verdichten in der Lage ist, dessen Energie bei Entspannung durch gesteuertes Ansprechen eines im Öl-Kreislauf angeordneten Überdruckventils in Wärme umgesetzt und über die Öl-Kühleinrichtung abgeführt wird. Im Allgemeinen wird beim normalen Bremsbetrieb das Überdruckventil auf einem fest eingestellten Wert belassen. Vorzugsweise wird die Bremsleistung mit Hilfe der Ölfördermenge geregelt. Die Hydraulikpumpe ist unmittelbar an die Räder gehalten, so dass auf diese Weise Getriebeteil oder die Bremsleistung nicht beansprucht werden.
Aus der US 5,848,664 A ist es bekannt, einen Retarder an ein Verteilergetriebe, welches mit einem von den Radmotoren angetriebenen Hydromotor verbunden ist, anzuschließen, wobei die Bremseinrichtung im Getriebestrang angeordnet ist. Die US 2,875,871 A zeigt ein Schwerlast-Fahrzeug unter Anwendung eines auf einem Drosselventil basierenden hydrostatischen Retarders und WO 2015/185215 A1 offenbart einen Fahrzeug-Verbund mit mehreren angetriebenen Fahrzeugmodulen.

Es ist daher Aufgabe der Erfindung, eine Bremsvorrichtung für ein derartiges Schwerlast-Fahrzeug, insbesondere für ein selbstangetriebenes Schwerlast-Fahrzeug, zu schaffen, durch welche in einfacher Art und Weise eine hinreichende Verlangsamung eines diese Bremsvorrichtung verwendenden Schwerlast-Fahrzeugs ermöglicht ist.

Außerdem soll ein für die erfindungsgemäße Bremsvorrichtung geeignetes Schwerlast-Fahrzeug sowie ein Verfahren zur Erhöhung der Bremsleistung eines derartigen Schwerstlast-Fahrzeugs vorgeschlagen werden.

Diese Aufgabe wird erfindungsgemäß durch eine Bremsvorrichtung mit den Merkmalen des Anspruchs 1 gelöst.

Das erfindungsgemäße Schwerlast-Fahrzeug zeichnet sich dadurch aus, dass es die erfindungsgemäße Bremsvorrichtung verwendet.

Das erfindungsgemäße Verfahren zur Erhöhung der Bremsleistung für ein Schwerlast-Fahrzeug schlägt vor, dass das rückströmende Druckmittel mindestens eines Druckmittelkreislaufs zu einer Bremsvorrichtung geführt wird, und dass diese Bremsvorrichtung gemäß einem der Ansprüche 1 bis 8 ausgebildet ist.

Durch die erfindungsgemäßen Maßnahmen wird in vorteilhafter Art und Weise eine Bremsvorrichtung sowie ein für diese Bremsvorrichtung besonders geeignetes Schwerlast-Fahrzeug ausgebildet, welche sich dadurch auszeichnen, dass in einfacher Art und Weise die dem Schwerlast-Fahrzeug zur Verfügung stehende Bremsleistung erhöht ist. Da zwischen der das Schwerlast-Fahrzeug antreibenden Antriebseinrichtung und der erfindungsgemäßen Bremsvorrichtung nur Druckschläuche zur Kupplung dieser beiden Einheiten erforderlich sind, ist der erfindungsgemäß vorgesehene Retarder der erfindungsgemäßen Bremsvorrichtung flexibel einbaubar.

Vorteilhafte Weiterbildungen der Erfindung sind Gegenstand der Unteransprüche.

Weitere Einzelheiten und Vorteile der Erfindung sind den Ausführungsbeispielen zu entnehmen, die im Folgenden anhand der Figuren beschrieben werden. Es zeigen:
- Figur 1: eine schematische Darstellung eines Schwerlast-Fahrzeugs zusammen mit einer Antriebsvorrichtung einer Bremsvorrichtung,
- Figur 2: ein erstes Ausführungsbeispiel einer Bremsvorrichtung
- Figur 3: ein zweites Ausführungsbeispiel einer Bremsvorrichtung, und
- Figur 4: ein drittes Ausführungsbeispiel einer Bremsvorrichtung.

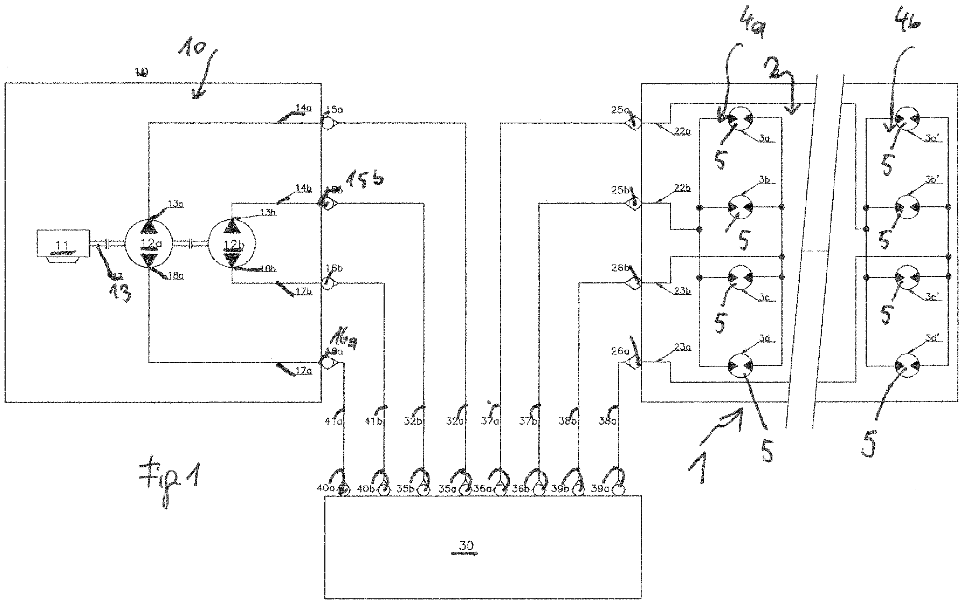

In Figur 1 ist schematisch ein allgemein mit 1 bezeichnetes Schwerlast-Fahrzeug dargestellt. Dem Fachmann ist der konstruktive Aufbau und die Funktionsweise eines derartigen Schwerlast-Fahrzeugs bekannt, so dass diese nicht im Detail beschrieben werden müssen. Das Schwerlast-Fahrzeug 1 weist ein Fahrgestell 2 auf, das von einer Anzahl von Radanordnungen 3a-3d getragen wird. Im gezeigten Ausführungsbeispiel eines Schwerlast-Fahrzeugs weist eine Anzahl von Achslinien auf, von denen in den Figuren exemplarisch eine erste Achslinie 4a mit vier Radanordnungen 3a-3d und eine zweite Achslinie 4b mit vier Radanordnungen 3a'-3d' gezeigt sind. Die einzelnen Radanordnungen 3a-3d, 3a'-3d' können als Einzelrad- oder Doppelradanordnungen ausgebildet sein. Auch eine Anordnung von mehreren Radanordnungen auf einer gemeinsamen Achse ist möglich. Dem Fachmann ist aus der nachfolgenden Beschreibung ersichtlich, dass es auf die spezielle Ausgestaltung der Radanordnungen 3a-3d, 3a'-3d' nicht ankommt. Wesentlich ist für das Verständnis der nachfolgend beschriebenen Bremsvorrichtung 30 sowie deren Zusammenwirken mit dem Schwerlast-Fahrzeug 1 nur, dass eine Anzahl von Radanordnungen 3a-3d, 3a'-3d' von einem oder mehreren hydraulischen Radmotoren 5 angetrieben sein. Grundsätzlich ist auch ein pneumatischer Antrieb möglich, welcher aber nicht bevorzugt ist. Auch ist es nicht erforderlich, dass jede Radanordnung 3a-3d, 3a'-3d' des Schwerlast-Fahrzeugs 1 hydraulisch oder pneumatisch angetrieben ist.

Die zum Betrieb des Schwerlast-Fahrzeugs 1 erforderliche Antriebsenergie wird von einer Antriebsvorrichtung 10 bereitgestellt. Diese weist einen Motor 11, insbesondere einen Verbrennungsmotor, hierbei insbesondere einen Dieselmotor, auf, welcher eine oder mehrere Pumpen, im hier beschriebenen Fall zwei Pumpen 12a, 12b, über eine Welle 13 antreibt. Die Pumpen 12a, 12b dienen dazu, den zum Antrieb der hydraulischen Radmotoren 5 erforderlichen hydraulischen Druck zu erzeugen. Eine derartige Antriebsvorrichtung 10 ist - wie bereits eingangs erwähnt - insbesondere aus der DE 10 2010 023 307 A1 bekannt und muss daher nicht mehr näher beschrieben werden.

Ein Druckmittelausgang 13a der ersten Pumpe 12a ist über eine Druckleitung 14a mit einem ersten Druckmittelausgang 15a der Antriebsvorrichtung 10 verbunden. Ein erster Druckmitteleingang 1 6a der Antriebsvorrichtung 10 ist über eine weitere Druckleitung 17a mit einem Druckmitteleingang 18a der ersten Pumpe 12a verbunden. In entsprechender Art und Weise ist ein Druckmittelausgang 13b der zweiten Pumpe 12b über eine Druckleitung 14b mit einem zweiten Druckmittelausgang 15b der Antriebsvorrichtung 10 verbunden und eine weitere Druckleitung 17b führt von einem zweiten Druckmitteleingang 16b der Antriebsvorrichtung 10 zu einem Druckmitteleingang 18b der zweiten Pumpe 12b.

Bei einem bekannten Schwerlast-Fahrzeug würden nun die Ausgänge 15a und 15b der Antriebsvorrichtung 10 mit entsprechenden Eingängen 25a, 25b des selbstangetriebenen Schwerlast-Fahrzeugs 1 über entsprechende Druckleitungen und Ausgänge 26a, 26b des Schwerlast-Fahrzeugs 1 über weitere Druckleitungen mit den entsprechenden Eingängen 16a, 16b der Antriebsvorrichtung 10 verbunden sein, so dass ein von der ersten Pumpe 12a erzeugtes Druckmedium über den ersten Druckmittelausgang 15a Antriebsvorrichtung 10 der zu dem Druckmitteleingang 25a des Schwerlast-Fahrzeugs 1 geleitet ist. Das aus den Radmotoren 5 rückfließende Druckmedium würde über die erste Druckleitung zu dem Druckmittelausgang 26a des Schwerlast-Fahrzeugs 1 geleitet und würde dann über eine entsprechende weitere Druckleitung zu dem ersten Druckmitteleingang 16a der Antriebsvorrichtung 10 geleitet sein. Das am zweiten Druckmittelausgang 15b der Antriebsvorrichtung 10 anliegende und zu dem zweiten Druckmitteleingang 25b des Schwerlast-Fahrzeugs 1 geleitete Druckmedium würde über die zweite Druckleitung zu den Radmotoren 5 des Schwerlast-Fahrzeugs 1 geleitet werden. Das aus diesen Radmotoren 5 rückfließende Druckmedium würde über eine Druckleitung zu dem Druckmittelausgang 26b des Schwerlast-Fahrzeugs 1 geleitet und bei den bekannten Schwerlast-Fahrzeugen dann zu dem Druckmitteleingang 16b rückgeführt werden. Die Flußrichtung des Druckmediums in beiden wie vorstehend festgelegten Druckmittelkreisläufen der beiden Pumpen 12a, 12b entspricht denjenigen bei der Vorwärtsfahrt des Schwerlast-Fahrzeugs 1. Einer dieser ersten Bewegungsrichtungen entgegengesetzten zweiten Bewegungsrichtung, in der Regel also bei einer Rückwärtsfahrt, läuft aufgrund der Arbeitsweise des Radmotoren 5 das Druckmittel in entgegengesetzter Richtung durch die beiden Druckmittelkreisläufe. Der detaillierte Aufbau und die Funktionsweise derartiger Druckmittelkreisläufe sind dem Fachmann aber bekannt und müssen daher nicht näher beschrieben werden. Die nachfolgende Beschreibung orientiert sich an einer Bewegung des Schwerlast-Fahrzeugs 1 in der ersten Bewegungsrichtung, also in der Regel dessen Vorwärtsfahrt. Bei der zweiten Bewegungsrichtung kehren sich dann die Druckverhältnisse um, das heißt, in der Regel wird dann aus einem Druckmittelausgang 15a, 15b der Antriebsvorrichtung 10 ein Druckmitteleingang für das Druckmedium, und die Eingänge 16a, 16b der Antriebsvorrichtung 10 werden dann zu entsprechenden Ausgängen, etc.

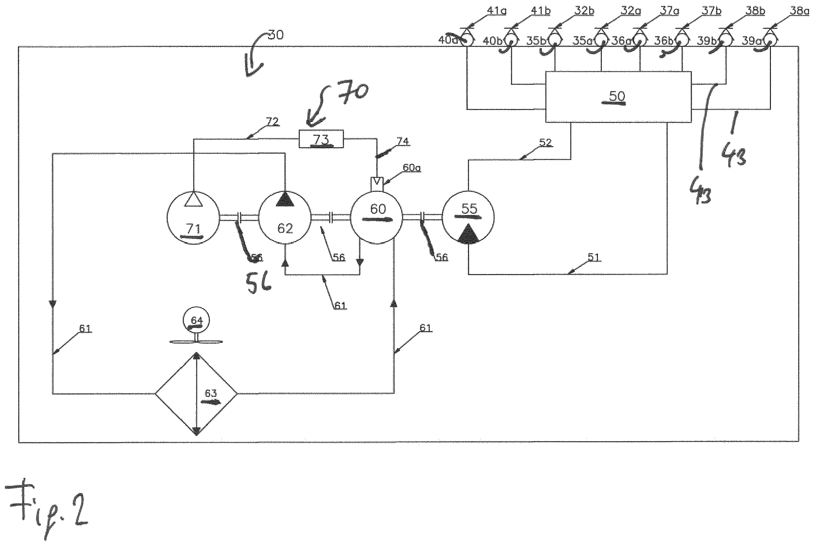

Bei dem hier beschriebenen Schwerlast-Fahrzeug 1 ist aber vorgesehen, dass - zumindest funktional - zwischen der Antriebsvorrichtung 10 und dem Schwerlast-Fahrzeug 1 eine Bremsvorrichtung 30 geschaltet ist, deren Aufbau und Funktion nachstehend erläutert ist. Das Funktionsprinzip der beschriebenen Bremsvorrichtung 30 beruht darauf, in einem Retarder 60 (siehe Figur 2) hydraulische Energie in Wärme umzusetzen und damit zu vernichten, weiche von den Radmotoren 5, die im Schubbetrieb, in der Regel also in der Bergabfahrt, als sogenannte "sekundäre Antriebseinheiten" fungieren, erzeugt wird. Hierdurch wird in vorteilhafter Art und Weise die Bremsleistung, auf welche das Schwerlast-Fahrzeug 1 zurückgreifen kann, erhöht.

Da - wie nachstehend beschrieben - die Bremsvorrichtung 30 nur über Druckleitungen mit dem Schwerlast-Fahrzeug 1 und der Antriebsvorrichtung 10 verbunden ist, wird in vorteilhafter Art und Weise ein flexibler Einbau derselben ermöglicht, die Bremsvorrichtung 30 und somit der in ihr enthaltene Retarder 60 müssen daher nicht mehr - wie es bei bekannten Nutzfahrzeugen der Fall ist - im mechanischen Antriebsstrang zwischen dem das Schwerlast-Fahrzeug 1 antreibenden Verbrennungsmotor und der angetriebenen Achse des Schwerlast-Fahrzeugs 1 angeordnet sein.

Die Figur 2 zeigt nun ein erstes Ausführungsbeispiel einer Bremsvorrichtung 30. Wie nun aus dieser Figur ersichtlich ist, weist die Bremsvorrichtung 30 einen ersten Druckmitteleingang 35a auf, welcher über eine Druckleitung 32a mit dem ersten Druckmittelausgang 15a der Antriebsvorrichtung 10 verbunden ist. Ein erster Druckmittelausgang 36a der Bremsvorrichtung 30 ist über eine Druckleitung 37a mit dem Druckmitteleingang 25a des Schwerlast-Fahrzeugs 1 verbunden. Der Druckmittelausgang 26a des Schwerlast-Fahrzeugs 1 ist über eine Druckleitung 38a mit einem zweiten Druckmitteleingang 39a der Bremsvorrichtung 30 verbunden. Ein Druckmittelausgang 40a der Bremsvorrichtung 30 ist über eine Druckleitung 41a mit dem Druckmitteleingang 16a der Antriebsvorrichtung 10 verbunden. Hierdurch wird ein von der ersten Pumpe 12a angetriebener erster Druckmittelkreislauf ausgebildet, welcher - wie aus Figur 1 ersichtlich - die Radmotoren 5 der Achslinie 4b mit dem entsprechenden Druckmedium versorgt.

In entsprechender Art und Weise ist der zweite Druckmittelausgang 15b der Antriebsvorrichtung 10 über eine Druckleitung 32b mit einem ersten Druckmitteleingang 35b der Bremsvorrichtung 30 verbunden. Ein Druckmittelausgang 36b ist über eine Druckleitung 37b mit dem Druckmitteleingang 25b des Schwerlast-Fahrzeugs 1 verbunden. Der Druckmittelausgang 26b des Schwerlast-Fahrzeugs 1 ist mit einer Druckleitung 35b mit einem zweiten Druckmitteleingang 39b des zweiten Druckmittelkreislaufs der Bremsvorrichtung 30 verbunden. Ein Druckmittelausgang 40b der Bremsvorrichtung 30 ist über eine Druckleitung 41b mit dem zweiten Druckmitteleingang 16b der Antriebsvorrichtung 10 verbunden. Hierdurch wird ein von der zweiten Pumpe 12b angetriebener zweiter Druckmittelkreislauf festgelegt, welcher die Radmotoren 5 der ersten Achslinie 4a mit einem diese antreibenden Druckmedium versorgt. Durch die vorstehend beschriebene Ausgestaltung werden also zwei Druckmittelkreisläufe ausgebildet, die von entsprechenden Ausgängen 15a bzw. 15b über die Bremsvorrichtung 30 zu den entsprechenden Eingängen 25a bzw. 25b des Schwerlast-Fahrzeugs 1 und über Ausgänge 26a bzw. 26b des Schwerlast-Fahrzeugs 1 wiederum über die Bremsvorrichtung 30 zurück zu den entsprechenden Eingängen 16a bzw. 16b der Antriebsvorrichtung 10 führen.

Wie aus der Figur 2 ersichtlich ist, sind die Eingänge 35a, 35b sowie 39a, 39b und die Ausgänge 36a, 36b und 40a, 40b der Bremsvorrichtung 30 jeweils über eine entsprechende Druckleitung 43 mit der Steuereinheit 50 verbunden, so dass - wie nachfolgend beschrieben - das in den beiden Druckmittelkreisläufen strömende Druckmedium wie nachstehend beschrieben umgeleitet werden kann. Die Steuereinheit 50 erlaubt es, die Bremsvorrichtung 30 in zwei unterschiedlichen Betriebsmodi zu betreiben, nämlich in einem "Normal-Modus" und in einem "Brems-Modus". Wird eine erhöhte Bremsleistung des Schwerlast-Fahrzeugs 1 nicht benötigt, so wird die Bremsvorrichtung 30 im erstgenannten "Normal-Modus" betrieben. Die Steuereinheit 50 leitet dann das am Druckmitteleingang 35a anliegende Druckmedium des ersten Druckmittelkreislaufs direkt zu dem Druckmittelausgang 36a. Das in diesem ersten Druckmittelkreislauf rückfließende Druckmittel wird vom Druckmitteleingang 39a direkt zu dem Druckmittelausgang 40a der Bremsvorrichtung 30 geleitet und fließt über die Druckleitung 42a zu dem Druckmitteleingang 16a der Antriebsvorrichtung 10 zurück, so dass ein geschlossener erster Druckmittelkreislauf ausgebildet wird. Entsprechendes gilt für den zweiten Druckmittelkreislauf. In dieser ersten Betriebsweise fließt also das Druckmittel des ersten bzw. zweiten Druckmittelkreislaufs - funktional betrachtet - wie bei dem bekannten Schwerlast-Fahrzeug.

Vorstehende Ausführungen gelten für einen Antrieb des Schwerlast-Fahrzeugs 1 in der ersten Bewegungsrichtung, in der Regel also in der Vorwärtsfahrt. Wie vorstehend erläutert, kehren sich die Strömungsverhältnisse bei einer Bewegung des Schwerlast-Fahrzeugs 1 in der zweiten Bewegungsrichtung um. Die Steuereinheit 50 leitet zum Beispiel dann das am Druckmitteleingang 16a, der in dieser zweiten Bewegungsrichtung als Druckmittelausgang für das Druckmedium des ersten Druckmittelkreislaufs dient, zu dem nun als Druckmitteleingang fungierenden Druckmittelausgang 26a des Schwerlast-Fahrzeugs 1.

Wird nun eine erhöhte Bremsleistung zur Verlangsamung des Schwerlast-Fahrzeugs 1 benötigt, so wird die Bremsfunktion der Bremsvorrichtung 30 aktiviert, indem z. B. der Fahrer oder Bediener des Schwerlast-Fahrzeugs 1 einen entsprechenden Knopf betätigt, welcher bewirkt, dass die Steuereinheit 50 in ihren "Brems-Modus" geschaltet wird. Dies bewirkt, dass das rückfließende Druckmittel des ersten und des zweiten Druckmittelkreislaufs nun nicht mehr - wie vorstehend beschrieben - unmittelbar zu der Antriebsvorrichtung 10 rückgeführt wird. Vielmehr ist vorgesehen, dass das rückfließende Druckmittel der beiden vorgenannten Druckmittelkreisläufe (zumindest teilweise) über eine Zuführleitung 51 zu einem Hydraulikmotor 55 der Bremsvorrichtung 30 geführt ist, diesen durchströmt und danach über eine Rückflussleitung 52 zur Steuereinheit 50 geführt und von dieser wieder - wie vorstehend beschrieben - zu der Antriebsvorrichtung 10 rückgeführt ist.

Der Hydraulikmotor 55 treibt über eine Welle 56 den Retarder 60 an. Ein derartiger Retarder 60 ist an und für sich bekannt und muss daher nicht mehr näher beschrieben werden. Seine Wirkung besteht darin, dass er eine Bremswirkung erzeugt, indem er die ihm zugeführte Rotationsenergie des Hydraulikmotors 55, welche durch das ihn durchströmende, vom Schwerlast-Fahrtzeug 1 rückfließende Druckmittel der Druckmittelkreisläufe erzeugt wird, in Wärme umsetzt und damit vernichtet. Wie bereits vorstehend ausgeführt, fungieren die Radmotoren 5 im Schubbetrieb als sekundäre Antriebsaggregate, sie erzeugen also in dieser Betriebsart Energie, welche das Schwerlast-Fahrzeug 1 - in diesem Fall unerwünscht - antreiben würde. In dem nun vorgesehen ist, dass diese von den Radmotoren 5 im Schubbetrieb erzeugte Energie zumindest teilweise durch den Retarder 60 vernichtet wird, wird eine Bremswirkung der Bremsvorrichtung 30 aufgebaut, welche zu einer Verlangsamung des - wie vorstehend beschrieben - hydraulisch angetriebenen Schwerlast-Fahrzeugs 1 führt.

Die im Retarder 60 erzeugte Wärmeenergie wird einem Kühlmittelkreislauf 61 zugeführt, welcher eine Kühlmittelpumpe 62 besitzt, welche das im Kühlmittelkreislauf 61 zirkulierende Kühlmittel, insbesondere Wasser, umwälzt. Im Kühlmittelkreislauf 61 ist ein Kühler 63 angeordnet, über den die im Kühlmittel gespeicherte Wärme in bekannter Art und Weise an die Umgebung abgegeben wird. Optional ist vorgesehen, dass der Kühler 63 über einen Lüfter 64 zusätzlich gekühlt wird.

Vorzugsweise ist des weiteren vorgesehen, dass die Bremsvorrichtung 30 eine Steuereinheit 70 für den Retarder 60 aufweist, durch welche dessen Bremsleistung steuerbar ist. Hierzu dient im hier beschriebenen Ausführungsbeispiel ein Kompressor 71, der direkt oder - wie hier gezeigt - indirekt vom Retarder 60 angetrieben ist. Der Kompressor 71 ist über eine Leitung 72 mit einem Stellglied 73 verbunden, dessen **Druckmittelausgang** über eine weitere Leitung 74 mit einem Steuereingang 60a des Retarders 60 verbunden ist. Die Steuerung des Retarders 60 erfolgt also hier über vom Kompressor 71 erzeugte Druckluft. Natürlich ist es auch möglich, den Retarder auf eine andere Art und Weise, z. B. elektrisch, zu steuern.

Im hier beschriebenen Ausführungsbeispiel ist vorgesehen, dass das rückfließende Druckmittel sowohl des ersten als auch des zweiten Druckmittelkreislaufs zum Hydraulikmotor 55 geführt ist. Natürlich ist es auch möglich, nur das rückfließende Druckmittel eines der beiden Druckmittelkreisläufe zum Hydraulikmotor 55 zu leiten und das Druckmittel des anderen Druckmittelkreislaufs direkt wieder zu der Antriebsvorrichtung 10 zurückzuführen. Eine derartige Maßnahme kann z. B. dann eingesetzt werden, wenn nur eine geringere Bremsleistung der Bremsvorrichtung 30 erzeugt werden soll, wird aber nicht bevorzugt.

Auch ist es möglich, dass für jeden der beiden Druckmittelkreisläufe jeweils ein Hydraulikmotor und jeweils ein mit diesem gekoppelter Retarder vorgesehen ist. Eine derartige Maßnahme besitzt den Vorteil, dass hierdurch die durch die Bremsvorrichtung 30 zusätzlich erzeugte Bremsleistung für jeden der beiden Druckmittelkreisläufe separat gesteuert oder geregelt werden kann.

Im hier beschriebenen Ausführungsbeispiel ist vorgesehen, dass der Hydraulikmotor 55 den Retarder 60 über eine Welle 56 antreibt und der Retarder 60 seinerseits über die Welle 56 mit der Kühlmittelpumpe 52 und dem Kompressor 71 verbunden ist. Diese Sekundäraggregate der Bremsvorrichtung 30, also (hier) der Hydraulikmotor 55, der Retarder 60, die Kühlmittelpumpe 55 und der Kompressor 71 sind somit in Serie geschaltet.

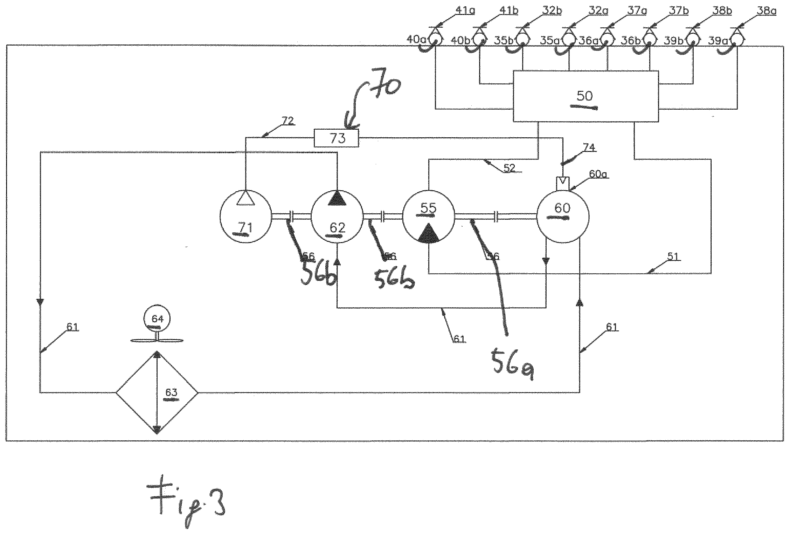

In Figur 3 ist ein zweites Ausführungsbeispiel einer Bremsvorrichtung 30 dargestellt. Einander entsprechende Bauteile sind mit den gleichen Bezugszeichen versehen und werden nicht mehr näher beschrieben. Der wesentliche Unterschied zwischen dem ersten und dem zweiten Ausführungsbeispiel ist nur darin zu sehen, dass der Retarder 60 und die zu seinem Betrieb erforderlichen Sekundäraggregate, hier die Kühlmittelpumpe 55 und der Kompressor 71 nicht mehr in Serie geschaltet sind, sondern dass vorgesehen ist, dass der Hydraulikmotor 55 über ein erstes Wellenteil 56a nur den Retarder 60 und über ein zweites Wellenteil 56b die vorgenannten Sekundäraggregate antreibt.

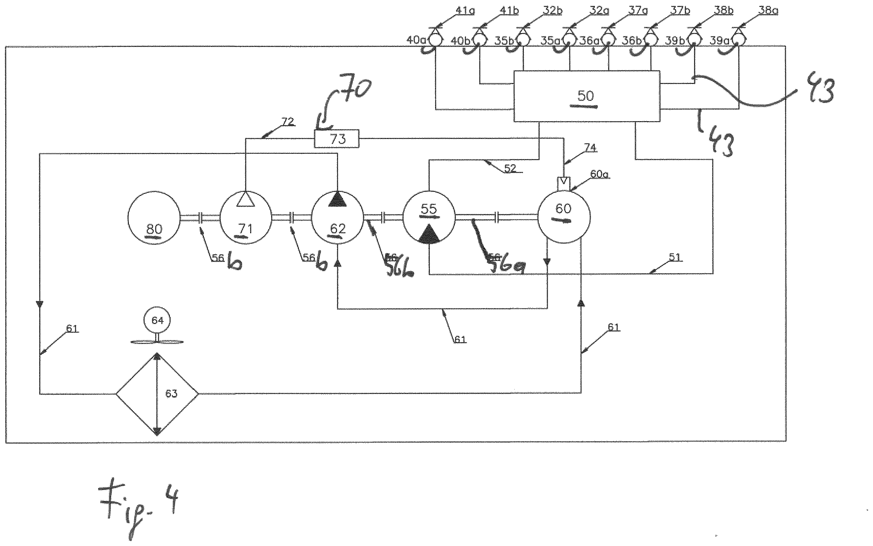

In der Figur 4 ist ein drittes Ausführungsbeispiel einer Bremsvorrichtung 30 dargestellt, wobei einander entsprechende Bauteile mit den gleichen Bezugszeichen beschrieben und nicht mehr erneut erläutert werden. Der wesentliche Unterschied zwischen dem ersten und dem dritten Ausführungsbeispiel ist, dass der Hydraulikmotor 55 nicht nur die Sekundäraggregate, welche zum Betrieb des Retarders 60 benötigt werden, antreibt, sondern dass hier vorgesehen ist, dass der Hydraulikmotor 55 auch noch ein Anbaugerät 80 antreibt. Diese Anbaugerät 80 kann z.B. ein elektrischer Generator sein. Eine derartige Maßnahme besitzt den Vorteil, dass die überschüssige Energie, welche bei den ersten beiden Ausführungsbeispielen vernichtet wird, um die erforderliche Bremsleistung der Bremsvorrichtung 30 zu erzeugen, durch das Anbaugerät 80, in nutzbare Energie umgewandelt wird. Durch das Anbaugerät 80, hier ein elektrischer Generator, kann somit z. B. Energie zurück gewonnen werden. Eine derartige Maßnahme hat positive Auswirkungen auf die Gesamtenergiebilanz eines derartigen Schwerlast-Fahrzeugs 1.

Wie in den vorstehend beschriebenen Ausführungsbeispielen wurde davon ausgegangen, dass das Schwerlast-Fahrzeug 1 ein selbstfahrendes Schwerlast-Fahrzeug 1 ist, das von einer Antriebsvorrichtung 10, welche mit dem Schwerlast-Fahrzeug 1 gekoppelt ist, angetrieben wird. Dem Fachmann ist aber klar ersichtlich, dass die beschriebenen Maßnahmen natürlich auch für gezogene Schwerlast-Fahrzeuge 1 anzuwenden, also bei Schwerlast-Fahrzeugen 1, die nicht selbst angetrieben, sondern von einem Zugfahrzeug gezogen werden. Die Bremsvorrichtung 30 wird dann zwischen dem als Anhänger ausgebildeten Schwerlast-Fahrzeug 1 und den diesen Anhänger ziehenden und die Antriebsvorrichtung 10 aufweisenden Zugfahrzeug geschaltet. Dem Fachmann ist aus der vorstehenden Beschreibung ersichtlich, welche Modifikationen er dabei vorzunehmen hat, so dass diese nicht mehr im Detail erläutert werden müssen.

Bei dem vorstehenden Ausführungsbeispiel wurde davon ausgegangen, dass die Bremsvorrichtung 30 nur einen Retarder 60 besitzt. Dies ist natürlich nicht zwingend. Vielmehr ist es möglich, mehr als einen Retarder vorzusehen. Diese zwei oder mehr Retarder 60 werden dann von den beschriebenen Sekundäraggregaten mit dem entsprechenden Kühlmedium versorgt. Dabei ist es natürlich auch möglich, dass jeder dieser Retarder 60 seine eigenen Sekundäraggregate aufweist. Auch ist es möglich, mehr als einen Hydraulikmotor 55 zu verwenden.

Zusammenfassend ist festzuhalten, dass die beschriebenen Maßnahmen eine Bremsvorrichtung 30 sowie ein für diese Bremsvorrichtung 30 besonders geeigneten Schwerlast-Fahrzeug 1 ausgebildet werden, welche sich dadurch auszeichnen, dass in einfacher Weise die dem Schwerlast-Fahrzeug 1 zur Verfügung stehende Bremsleistung erhöht ist. Da zwischen der das Schwerlast-Fahrzeug 1 antreibende Antriebseinrichtung 10 und dieser Antriebsvorrichtung zur Ankoppelung der Bremsvorrichtung 30 nur Druckschläuche erforderlich sind, ist die Bremsvorrichtung 30 und somit der Retarder 60 flexibel einbaubar.

## Patentansprüche

1. Bremsvorrichtung (30) für ein Schwerlast-Fahrzeug (1), welches ein Fahrgestell (2) mit einer Anzahl von Radanordnungen (3a-3d, 3a'-3d') mit Radmotoren (5) besitzt, welchen ein von einer Antriebsvorrichtung (10) bereitgestelltes Druckmedium über Druckleitungen (32a, 36a; 32b, 36b) mindestens eines Druckmittelkreislaufs zugeführt ist, wobei dieses Druckmedium nach dem Durchströmen des oder der Radmotoren (5) über weitere Druckleitungen (37a, 41a; 37b, 41b) zu der Antriebsvorrichtung (10) zurückgeführt ist, **dadurch gekennzeichnet, dass** eine mit dem Schwerlast-Fahrzeug (1) nur über Druckleitungen (32a, 36a; 32b, 36b) verbundene Bremsvorrichtung (30) vorgesehen ist, die zumindest zwischen einem Druckmitteleingang (16a; 16b) der Antriebsvorrichtung (10) und einem Druckmittelausgang (26a; 26b) des Schwerlast-Fahrzeugs (1) geschaltet ist, dass die Bremsvorrichtung (30) mindestens einen Hydraulikmotor (55) aufweist, der durch das vom Schwerlast-Fahrzeug (1) zu der Antriebsvorrichtung (10) rückfließende Druckmedium angetrieben ist, und dass die Bremsvorrichtung (30) mindestens einen Retarder (60) aufweist, der oder die jeweils von mindestens einem Hydraulikmotor (55) über eine Welle (56) angetrieben ist oder sind.

2. Bremsvorrichtung nach Anspruch 1, **dadurch gekennzeichnet, dass** die Bremsvorrichtung (30) mindestens einen Kühlmittelkreislauf (61) zur Abfuhr der von dem oder den Retardern (60) erzeugten Wärme aufweist.

3. Bremsvorrichtung nach einem der vorangehenden Ansprüche, **dadurch gekennzeichnet, dass** die Bremsvorrichtung (30) mindestens einen Druckmitteleingang (39a; 39b) aufweist, durch welchen ihr das vom Schwerlast-Fahrzeug (1) rückströmende Druckmedium mindestens eines Druckmittelkreislaufes zuführbar ist, und mindestens einen Druckmittelausgang (40a; 40b) besitzt, durch den das ihr zugeführte, vom Schwerlast-Fahrzeug (1) rückströmende Druckmedium zu der Antriebsvorrichtung (10) führbar ist.

4. Bremsvorrichtung nach Anspruch 3, **dadurch gekennzeichnet, dass** die Bremsvorrichtung (30) mindestens einen weiteren Druckmitteleingang (35a; 35b), über den ihr das von der Antriebseinrichtung (10) erzeugte Druckmedium mindestens eines weiteren Druckmittelkreislaufes zuführbar ist, und mindestens einen weiteren Druckmittelausgang (36a; 36b), über den das von der Antriebseinrichtung (10) erzeugte Druckmedium einem weiteren Druckmitteleingang (25a; 25b) des Schwerlast-Fahrzeugs (1) zuführbar ist, besitzt.

5. Bremsvorrichtung nach einem der vorangehenden Ansprüche, **dadurch gekennzeichnet, dass** die Bremsvorrichtung (30) eine Steuereinheit (50) aufweist, welche das ihr zugeführte Druckmedium mindestens eines Druckmittelkreislaufs wahlweise zu dem oder den Hydraulikmotor (55) der Bremsvorrichtung (30) leitet.

6. Bremsvorrichtung nach Anspruch 5, **dadurch gekennzeichnet, dass** die Steuereinheit (50) und der Hydraulikmotor (55) über eine Zuflussleitung (51) und eine Rückflussleitung (52) verbunden sind.

7. Bremsvorrichtung nach einem der vorangehenden Ansprüche, **dadurch gekennzeichnet, dass** die Bremsvorrichtung (30) einen Kühlmittelkreislauf (61) aufweist, durch welchen die vom Retarder (60) erzeugte Wärme abführbar ist.

8. Bremsvorrichtung nach einem der vorangehenden Ansprüche, **dadurch gekennzeichnet, dass** der Hydraulikmotor (55) mindestens ein Sekundäraggregat antreibt.

9. Schwerlast-Fahrzeug, welches ein Fahrgestell (2) mit einer Anzahl von angetriebenen Radanordnungen (3a-3d; 3a'-3d') mit Radmotoren (5) besitzt, welchen ein von einer Antriebseinrichtung (10) bereitgestelltes Druckmedium über Druckleitungen (32a, 36a; 32b, 36b) zugeführt ist, wobei das Druckmedium nach dem Durchströmen des oder der Radmotoren (5) über weitere Druckleitungen (37a, 41a; 37b, 41b) zu der Antriebsvorrichtung (10) rückgeführt ist, **dadurch gekennzeichnet, dass** zwischen der Antriebsvorrichtung (10) und dem Schwerlast-Fahrzeug (1) eine Bremsvorrichtung (30) angeordnet ist, und dass die Bremsvorrichtung nach einem der Ansprüche 1 bis 8 ausgebildet ist.

10. Verfahren zur Erhöhung der Bremsleistung eines Schwerlast-Fahrzeugs, welches eine Anzahl von mit Radmotoren (5) angetriebenen Radanordnungen (3a-3d; 3a'-3d') mit Radmotoren (5) besitzt, zu denen ein von einer Antriebsvorrichtung (10) bereitgestelltes Druckmedium mindestens eines Druckmittelkreislaufes geführt und nach dem Durchströmen des oder der Radmotoren (5) zur der Antriebsvorrichtung (10) zurückgeführt wird, **dadurch gekennzeichnet, dass** das rückströmende Druckmittel mindestens eines Druckmittelkreislaufs zu einer Bremsvorrichtung (30) geführt wird, und dass diese Bremsvorrichtung (30) gemäß einem der Ansprüche 1 bis 8 ausgebildet ist.

## Claims

1. Braking device (30) for a heavy duty vehicle (1), which comprises a chassis (2) with a number of wheel assemblies (3a-3d, 3a'-3d') with wheel motors (5), to which a pressure medium provided by an entrainment device (10) is led via pressure lines (32a, 36a; 32b, 36b) of at least one pressure medium circuit, whereby said pressure medium is led back via further pressure lines (37a, 41a; 37b, 41b) to the entrainment device (10) after flowing through the one or the wheel motors (5), **characterized in that** a braking device (30) is provided, which is connected with the heavy duty vehicle (1) only via pressure lines (32a, 36a; 32b, 36b), which is arranged at least between a pressure medium inlet (16; 16b) of the entrainment device (10) and a pressure medium outlet (26a; 26b) of the heavy duty vehicle (1), that the braking device (30) comprises at least one hydraulic motor (55), which is entrained by the pressure medium flowing back from the heavy duty vehicle (1) to the entrainment device (10), and that the braking device (10) comprises at least one retarder (60), said retarder or said retarders being entrained by at least one hydraulic motor (55) via a shaft (56).

2. Braking device according to claim 1, **characterized in that** the braking device (30) comprises at least one cooling medium circuit (61) for dissipating the heat generated by the one or the retarders (60).

3. Braking device according to one of the previous claims, **characterized in that** the braking device (30) comprises at least one pressure medium inlet (39a; 39b), through which the pressure medium flowing of at least one pressure medium circuit back from the heavy duty vehicle can be supplied to it, and at least one pressure medium outlet (40a; 40b), by which the pressure medium supplied to it and flowing back from the heavy duty vehicle (1) can be led to the entrainment device (10).

4. Braking device according to claim 3, **characterized in that** the braking device (30) comprises at least one further pressure medium inlet (35a; 35b), through which the pressure medium of at least one further pressure medium circuit generated by the entrainment device (10) can be supplied to it, and at least one further pressure medium outlet (36a; 36b), through which the pressure medium generated by the entrainment device (10) can be supplied to a further pressure medium inlet (25a; 25b) of the heavy duty vehicle.

5. Braking device according to one of the previous claims, **characterized in that** the braking device (30) comprises a control unit (50), which leads the pressure medium of at least one pressure medium circuit optionally to the one or to the hydraulic motors (55) of the braking device (30).

6. Braking device according to claim 5, **characterized in that** the control unit (50) and the hydraulic motor (55) are connected by an inlet line (51) and an outlet line (52).

7. Braking device according to one of the previous claims, **characterized in that** the braking device (30) comprises a cooling medium circuit (61), through which the heat generated by the retarder (60) can be dissipated.

8. Braking device according to one of the previous claims, **characterized in that** the hydraulic motor (55) comprises at least one secondary aggregate unit.

9. Heavy duty vehicle, having a chassis (2) with a number of entrained wheel assemblies (3a-3d; 3a'-3d') with wheel motors (5), to which a pressure medium supplied by an entrainment device (10) is led via pressure lines (32a, 36a; 32b, 36b), whereby the pressure medium is led via further pressure lines (37a, 41a, 37b, 41b) to the entrainment device (10) after passing the one or the wheel motors (5), **characterized in that** between the entrainment device (10) and the heavy load vehicle (1) a braking device (30) is arranged, and that the braking device is provided according to one of the claims 1 to 8.

10. Method for increasing the braking power of a heavy duty vehicle which has a number of wheel assemblies (3a-3d; 3a'-3d') having wheel motors (5), to which a pressure medium provided by an entrainment device (10) of at least one pressure medium circuit is led and is led back to the entrainment device (10) after flowing through the one or the wheel motors (5), **characterized in that** the back flowing pressure medium of at least one pressure medium circuit is led to a braking device (30), and that the braking device (30) is provided according to one of the claims 1 to 8.

## Revendications

1. Dispositif de freinage (30) pour un véhicule destiné au transport de charges lourdes (1), lequel dispose d'un châssis (2) avec un nombre d'ensembles de roues (3a-3d, 3a'-3d') avec des moteurs de roue (5), auxquels un milieu de pression mis à disposition par un dispositif d'entraînement (10) est amené par le biais de conduites de pression (32a, 36a; 32b, 36b) d'au moins un circuit de moyen de pression, dans lequel ce milieu de pression est ramené au dispositif d'entraînement (10) après le passage du ou des moteurs de roue (5) par le biais d'autres conduites de pression (37a, 41a ; 37b, 41b), **caractérisé en ce qu'**un dispositif de freinage (30) relié au véhicule destiné au transport de charges lourdes (1) uniquement par le biais de conduites de pression (32a, 36a ; 32b, 36b) est prévu, qui est commuté au moins entre une entrée de moyen de pression (16a; 16b) du dispositif d'entraînement (10) et une sortie de moyen de pression (26a ; 26b) du véhicule destiné au transport de charges lourdes (1), que le dispositif de freinage (30) présente au moins un moteur hydraulique (55), qui est entraîné par le milieu de pression refluant du véhicule destiné au transport de charges lourdes (1) au dispositif d'entraînement (10), et que le dispositif de freinage (30) présente au moins un ralentisseur (60), qui est ou sont entraîné(s) respectivement par au moins un moteur hydraulique (55) par le biais d'un arbre (56).

2. Dispositif de freinage selon la revendication 1, **caractérisé en ce que** le dispositif de freinage (30) présente au moins un circuit de réfrigérant (61) pour l'évacuation de la chaleur générée par le ou les ralentisseurs (60).

3. Dispositif de freinage selon l'une quelconque des revendications précédentes, **caractérisé en ce que** le dispositif de freinage (30) présente au moins une entrée de moyen de pression (39a ; 39b), par laquelle le milieu de pression refluant du véhicule destiné au transport de charges lourdes (1) d'au moins un circuit de milieu de pression peut lui être amené, et dispose d'au moins une sortie de moyen de pression (40a ; 40b), par laquelle le milieu de pression refluant du véhicule destiné au transport de charges lourdes (1) qui lui est amené peut être amené au dispositif d'entraînement (10).

4. Dispositif de freinage selon la revendication 3, **caractérisé en ce que** le dispositif de freinage (30) dispose d'au moins une autre entrée de moyen de pression (35a ; 35b), par le biais de laquelle le milieu de pression généré par le dispositif d'entraînement (10) d'au moins un autre circuit de moyen de pression peut lui être amené, et au moins une autre sortie de milieu de pression (36a ; 36b) peut être amenée à une autre entrée de moyen de pression (25a ; 25b) du véhicule destiné au transport de charges lourdes (1) par le biais du milieu de pression généré par le dispositif d'entraînement (10).

5. Dispositif de freinage selon l'une quelconque des revendications précédentes, **caractérisé en ce que** le dispositif de freinage (30) présente une unité de commande (50), laquelle conduit le milieu de pression qui lui est amené d'au moins un circuit de moyen de pression au choix vers le ou les moteurs hydrauliques (55) du dispositif de freinage (30).

6. Dispositif de freinage selon la revendication 5, **caractérisé en ce que** l'unité de commande (50) et le moteur hydraulique (55) sont reliés par le biais d'une conduite d'alimentation (51) et d'une conduite de retour (52).

7. Dispositif de freinage selon l'une quelconque des revendications précédentes, **caractérisé en ce que** le dispositif de freinage (30) présente un circuit de réfrigérant (61), par lequel la chaleur générée par le ralentisseur (60) peut être évacuée.

8. Dispositif de freinage selon l'une quelconque des revendications précédentes, **caractérisé en ce que** le moteur hydraulique (55) entraîne au moins un groupe secondaire.

9. Véhicule destiné au transport de charges lourdes, lequel dispose d'un châssis (2) avec un nombre d'ensembles de roues entraînées (3a-3d ; 3a'-3d') avec des moteurs de roue (5), auxquels un milieu de pression mis à disposition par un dispositif d'entraînement (10) est amené par le biais de conduites de pression (32a, 36a ; 32b, 36b), dans lequel le milieu de pression est ramené au dispositif d'entraînement (10) après le passage du ou des moteurs de roue (5) par le biais d'autres conduites de pression (37a, 41a ; 37b, 41b), **caractérisé en ce qu'**un dispositif de freinage (30) est agencé entre le dispositif d'entraînement (10) et le véhicule destiné au transport de charges lourdes (1), et que le dispositif de freinage est réalisé selon l'une quelconque des revendications 1 à 8.

10. Procédé d'augmentation de la puissance de freinage d'un véhicule destiné au transport de charges lourdes, lequel dispose d'un nombre d'ensembles de roues (3a-3d ; 3a'-3d') entraînés avec des moteurs de roue (5) avec des moteurs de roue (5), auxquels un milieu de pression mis à disposition par un dispositif d'entraînement (10) d'au moins un circuit de milieu de pression est amené et ramené au dispositif d'entraînement (10) après le passage du ou des moteurs de roue (5), **caractérisé en ce que** le moyen de pression refluant d'au moins un circuit de moyen de pression est amené à un dispositif de freinage (30), et que le dispositif de freinage (30) est réalisé selon l'une quelconque des revendications 1 à 8.
